(19) **Europäisches Patentamt European Patent Office Office européen des brevets**

(11) **EP 3 740 526 B1**

(12) **FASCICULE DE BREVET EUROPEEN**

(45) Date de publication et mention de la délivrance du brevet:
**10.04.2024 Bulletin 2024/15**

(21) Numéro de dépôt: **19703404.4**

(22) Date de dépôt: **15.01.2019**

(51) Classification Internationale des Brevets (IPC):
**C08J 3/12** *(2006.01)* **C08K 3/36** *(2006.01)*

(52) Classification Coopérative des Brevets (CPC):
(C-Sets disponibles)
**C08K 3/36; C08J 3/124; C08J 3/128;** C08J 2327/12

(Cont.)

(86) Numéro de dépôt international:
**PCT/FR2019/050074**

(87) Numéro de publication internationale:
**WO 2019/138201 (18.07.2019 Gazette 2019/29)**

(54) **POUDRE DE POLYMERE FLUORE ADAPTEE AU PROTOTYPAGE RAPIDE PAR FRITTAGE LASER**

PULVER AUS FLUOROPOLYMER FÜR SCHNELLES PROTOTYPING DURCH LASER-SINTERN

POWDER OF FLUOROPOLYMER ADAPTED TO THE RAPID PROTOTYPING BY LASER SINTERING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.01.2018 FR 1850295**

(43) Date de publication de la demande:
**25.11.2020 Bulletin 2020/48**

(73) Titulaire: **ARKEMA FRANCE**
**92700 Colombes (FR)**

(72) Inventeurs:
• **BIZET, Stéphane**
**27470 SERQUIGNY (FR)**
• **LE BOTERFF, Julien**
**27470 SERQUIGNY (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**WO-A1-2017/040897 WO-A1-2017/173258**
**WO-A2-2007/133912 US-A1- 2013 052 453**
**US-A1- 2017 321 034**

(52) Classification Coopérative des Brevets (CPC):
(Cont.)

C-Sets
**C08K 3/36, C08L 27/12**

**EP 3 740 526 B1**

**Description**

<u>DOMAINE DE L'INVENTION</u>

La présente invention concerne une composition à base de poudre de polymère fluoré thermoplastique, notamment à base de poly(fluorure de vinylidène) (PVDF) à coulabilité améliorée, particulièrement adaptée à la fabrication de pièces par le procédé de frittage laser 3D. L'invention concerne aussi un procédé d'agglomération de poudre, couche par couche, par fusion ou frittage mettant en oeuvre ladite composition. L'invention se rapporte enfin à un objet en trois dimensions obtenu par la mise en oeuvre de ce procédé.

<u>ARRIERE-PLAN TECHNIQUE</u>

L'agglomération de poudres par fusion (qu'on appelle ci-après « frittage ») est obtenue par un rayonnement tel que par exemple un faisceau laser (« laser sintering »), un rayonnement infrarouge, un rayonnement UV ou toute source de rayonnement électromagnétique permettant de faire fondre la poudre couche par couche pour fabriquer des objets. La technologie de frittage de poudres sous un faisceau laser sert à fabriquer des objets en trois dimensions tels que des prototypes, des modèles, mais aussi des pièces fonctionnelles, notamment dans les domaines automobile, nautique, aéronautique, aérospatial, médical (prothèses, systèmes auditifs, tissus cellulaires...), le textile, l'habillement, la mode, la décoration, des boîtiers pour l'électronique, la téléphonie, la domotique, l'informatique, l'éclairage.

On dépose une fine couche de poudre du polymère considéré sur une plaque horizontale maintenue dans une enceinte chauffée à une certaine température. Le laser apporte l'énergie nécessaire pour fusionner les particules de poudre en différents points de la couche de poudre selon une géométrie correspondant à l'objet, par exemple à l'aide d'un ordinateur ayant en mémoire la forme de l'objet et restituant cette dernière sous forme de tranches. Ensuite, on abaisse la plaque horizontale d'une valeur correspondant à l'épaisseur d'une couche de poudre (par exemple entre 0,05 et 2 mm et généralement de l'ordre de 0,1 mm) puis on dépose une nouvelle couche de poudre. Cette couche de poudre est à une température appelée dans la suite température du lit de poudre (ou température du lit). Le laser apporte l'énergie nécessaire à fusionner les particules de poudre selon une géométrie correspondant à cette nouvelle tranche de l'objet et ainsi de suite. La procédure est répétée jusqu'à ce que l'on ait fabriqué tout l'objet. Outre la fusion des particules de poudre induite par l'énergie apportée par le laser, il est nécessaire d'utiliser des conditions qui permettent la coalescence des particules entre elles et une bonne adhésion/coalescence des couches entre elles de telle sorte que les propriétés mécaniques des objets fabriqués soient maximisées.

Le document WO 2007/133912 décrit un procédé de fabrication d'objets tridimensionnels à partir de poudres de polymères fluorés par frittage laser. Les poudres de polymères fluorés employées dans ce procédé comprennent des polymères à base de fluorure de vinylidène ou de chlorotrifluoréthylène, et peuvent inclure un polymère acrylique ou méthacrylique. Elles peuvent contenir jusqu'à 10% en poids d'additifs tels que la poudre de verre. Cependant, aucun exemple n'est fourni, montrant les propriétés des poudres utilisées ou des objets obtenus.

Par ailleurs, le frittage du PVDF, tel que décrit dans la publication de Wei Huang et al. "Microstructure, mechanical, and biological properties of porous poly(vinylidene fluoride) scaffolds fabricated by sélective laser sintering", International Journal of Polymer Science, Vol. 2015, Article ID 132965, conduit à une forte diminution de la cristallinité dans les pièces frittées, qui est le signe d'une dégradation du PVDF sous l'action du laser.

La publication de Tarasova E. et al. « Layering laser-assisted sintering of functional graded porous PZT ceramoplasts », Phase Transitions, 2013, vol. 86, n°11, pages 1121- 1129 décrit la fabrication par frittage laser de pièces composites PVDF - titanate zirconate de plomb (PZT) pour obtenir des propriétés piézoélectriques. Elle mentionne le fait que le PVDF réticule au moins en partie sous le laser, signe de sa dégradation.

Le document WO 2017/040897 décrit des poudres de polymères thermoplastiques qui sont recouvertes d'agent d'écoulement. Les particules de polymère ont une taille définie par un Dv50 allant de 10 nm à 1 mm.

Il existe donc un besoin de disposer d'une poudre de polymère fluoré qui possède des propriétés adaptées au frittage laser, permettant d'obtenir des pièces frittées de bonne qualité sans subir une dégradation lors du frittage.

<u>RESUME DE L'INVENTION</u>

L'invention concerne en premier lieu une composition sous forme de poudre comprenant un polymère fluoré thermoplastique et un agent d'écoulement, telle que définie dans la revendication 1.

Le polymère fluoré contient dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

Selon un mode de réalisation, le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère copolymérisable avec le fluorure de vinylidène.

Selon un mode de réalisation, le polymère fluoré présente une viscosité inférieure ou égale à 1600 Pa.s, de préférence inférieure ou égale à 1000 Pa.s, à une température de 232°C et à un taux de cisaillement de 100 s$^{-1}$.

La composition de l'invention comprend en outre un agent d'écoulement en quantité suffisante pour que la composition s'écoule et forme une couche plane, notamment lors d'un procédé de frittage couche par couche.

L'agent d'écoulement est par exemple choisi parmi : les silices précipitées, les silices fumées, les silices vitreuses, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium. Selon un mode de réalisation, l'agent d'écoulement est une silice hydrophobe.

La présente invention a également pour objet l'utilisation d'une composition de poudre thermoplastique telle que définie précédemment, dans un procédé de frittage pour fabriquer un objet tridimensionnel.

La présente invention a notamment pour objet un procédé de fabrication d'un objet tridimensionnel, comprenant le frittage couche par couche d'une poudre de composition selon l'invention.

Enfin, la présente invention concerne un objet tridimensionnel susceptible d'être fabriqué selon le procédé décrit précédemment.

La présente invention permet de surmonter les inconvénients de l'état de la technique. Elle fournit une poudre de polymère fluoré avec une bonne coulabilité et une densité apparente augmentée par l'additivation de silice. Elle fournit plus particulièrement une composition présentant une bonne coulabilité et la bonne densité permettent sa mise en oeuvre par le procédé de frittage sous rayonnement électromagnétique. Cela est accompli grâce à l'association entre un polymère fluoré et un agent d'écoulement hydrophobe, préférentiellement une silice fumée hydrophobe. De plus, la viscosité adaptée du polymère fluoré de l'invention permet une bonne coalescence des grains de poudre lors du procédé de frittage ainsi qu'une bonne adhésion/cohésion entre les couches successives fondues de polymère. Le polymère fluoré est choisi par rapport à sa viscosité qui doit être suffisamment faible pour faciliter la coalescence et l'inter-diffusion des chaînes entre couches à la température du bain de poudre. Le critère de choix du polymère fluoré peut donc être la viscosité à gradient de cisaillement nul à la température de lit de poudre, qui est typiquement de l'ordre de 150°C pour le PVDF. Le fait d'avoir une bonne coulabilité, une bonne densité et une bonne qualité du lit de poudre, et une viscosité du polymère adaptée permet de travailler dans des conditions de procédé (densité d'énergie du laser, nombre de passage du laser par couche) standards sans risquer de dégrader le polymère fluoré et générer de l'acide fluorhydrique lors de la fabrication de la pièce.

Elle est particulièrement appropriée pour la fabrication d'objets en trois dimensions.

DESCRIPTION DE MODES DE REALISATION DE L'INVENTION

L'invention est maintenant décrite plus en détail et de façon non limitative dans la description qui suit.

Selon un premier aspect, l'invention concerne une composition pulvérulente comprenant un polymère fluoré thermoplastique et un agent d'écoulement.

Selon diverses réalisations, ladite composition comprend les caractères suivants, le cas échéant combinés.

L'invention repose d'abord sur l'utilisation d'un polymère fluoré. Par « fluoré » on entend un polymère comportant des groupements -F. Le polymère fluoré contient dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy. A titre d'exemple de monomère on peut citer le fluorure de vinyle; le fluorure de vinylidène (VDF); le trifluoroéthylène (VF3); le chlorotrifluoroéthylène (CTFE); le 1,2- difluoroéthylène; le tétrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro (1,3-dioxole); le perfluoro(2,2-diméthyl- 1,3 -dioxole) (PDD); le produit de formule CF2=CFOCF2CF(CF3)OCF2CF2X dans laquelle X est SO2F, CO2H, CH2OH, CH2OCN ou CH20PO3H; le produit de formule CF2=CFOCF2CF2SO2F; le produit de formule F(CF2)nCH20CF=CF2 dans laquelle n est 1, 2, 3, 4 or 5; le produit de formule R1CH2OCF=CF2 dans laquelle R1 est l'hydrogène ou F(CF2)m et m vaut 1, 2, 3 ou 4; le produit de formule R2OCF=CH2 dans laquelle R2 est F(CF2)p et p est 1, 2, 3 or 4; le perfluorobutyl éthylène (PFBE); le 3,3,3-trifluoropropène et le 2-trifluorométhyl-3,3,3-trifluoro-1-propène.

Le polymère fluoré peut être un homopolymère ou un copolymère, il peut aussi comprendre des monomères non fluorés tels que l'éthylène.

Selon un mode de réalisation, le polymère fluoré est un homopolymère de l'un des monomères suivants : fluorure de vinyle, fluorure de vinylidène, chlorotrifluoroéthylène, ou tétrafluoroéthylène.

Selon un mode de réalisation, le polymère fluoré est choisi parmi les copolymères d'éthylène et de chlorotrifluoroéthylène, d'éthylène et de tétrafluoroéthylène, d'hexafluoropropylène et de tétrafluoroéthylène, de tétrafluoroéthylène et d'un monomère de la famille des perfluoro(alkyl vinyl)éther.

Selon un mode de réalisation, le polymère fluoré est un polymère comprenant des motifs issus du fluorure de vinylidène, et de préférence est choisi parmi le polyfluorure de vinylidène homopolymère et les copolymères comprenant des motifs de fluorure de vinylidène et des motifs issus d'au moins un autre comonomère choisi parmi : le fluorure de vinyle; le trifluoroéthylène; le chlorotrifluoroéthylène; le 1,2-difluoroéthylène; le tétrafluoroéthylène; l'hexafluoropropylène; les perfluoro(alkyl vinyl) éthers tels que le perfluoro(méthyl vinyl)éther, le perfluoro(éthyl vinyl) éther et le perfluoro(propyl vinyl) éther; le perfluoro(1,3-dioxole); le perfluoro(2,2-diméthyl-1,3-dioxole), et leurs mélanges. De préférence le comonomère fluoré est choisi parmi le chlorotrifluoroéthylène, l'hexafluoropropylène, le trifluoroéthylène et le tétrafluoroéthylène, et leurs mélanges. Dans une variante, le copolymère ne comprend que du VDF et de l'hexafluoropropylène (HFP). De manière plus particulièrement préférée, les copolymères contiennent au moins 50 % en moles de motifs issus du fluorure de vinylidène, et de manière encore plus préférée au moins 75 % en moles de motifs issus du fluorure de vinylidène.

Selon un mode de réalisation, le polymère fluoré est un terpolymère d'éthylène, d'hexafluoropropylène et de tétrafluoroéthylène, ou un terpolymère de tétrafluoroéthylène, de fluorure de vinylidène et d'hexafluoropropylène.

Par « thermoplastique », on entend ici un polymère non élastomérique. Un polymère élastomérique est défini comme étant un polymère qui peut être étiré, à température ambiante, à deux fois sa longueur initiale et qui, après relâchement des contraintes, reprend rapidement sa longueur initiale, à 10 % près, comme indiqué par l'ASTM dans la Spécial Technical Publication n°184.

Selon un mode de réalisation, le polymère fluoré présente une viscosité inférieure ou égale à 1600 Pa.s, de préférence inférieure ou égale à 1000 Pa.s, à une température de 232°C et à un taux de cisaillement de 100 s⁻¹. La viscosité est mesurée à 232°C, à un taux de cisaillement de 100 s⁻¹ à l'aide d'un rhéomètre capillaire ou d'un rhéomètre à plaques parallèles, selon la norme ASTM D3825.

Selon un mode de réalisation, qui peut être combiné à celui décrit dans le paragraphe précédent, le polymère fluoré présente une viscosité à gradient de cisaillement nul à la température du lit de poudre inférieure ou égale à 75 000 Pa.s, préférentiellement inférieure à 25 000 Pa.s et encore plus préférentiellement inférieure à 15000 Pa.s. La méthode employée pour mesurer la viscosité à gradient de cisaillement nul à la température du lit de poudre est la suivante. La viscosité est mesurée à l'aide d'un rhéomètre plan/plan à trois températures, supérieures à la température de fusion du polymère fluoré. Typiquement, la viscosité est mesurée à trois températures $T_1$, $T_2$, $T_3$ telles que $T_1 < T_2 < T_3$ et $T_1$ soit supérieure à la température de fusion du polymère fluoré. A chaque température, la viscosité est mesurée sur une gamme de fréquences angulaires. Pour une température donnée, la viscosité devient indépendante de la fréquence angulaire en dessous d'une fréquence angulaire critique et atteint un plateau qui correspond à la valeur de la viscosité à gradient de cisaillement nul. La température $T_1$ et la gamme de fréquences angulaires de mesure sont choisies de façon à atteindre la viscosité à gradient de cisaillement nul. La viscosité à gradient de cisaillement nul à la température du lit de poudre est ensuite obtenue par extrapolation de la droite représentant le logarithme de la viscosité à gradient de cisaillement nul en fonction de l'inverse de la température en degrés Kelvin. Par exemple, dans le cas où le polymère fluoré est un homopolymère de fluorure de vinylidène ou un copolymère de fluorure de vinylidène et d'hexafluoropropylène, les températures typiquement choisies pour la mesure de viscosité sont 190°C, 210°C, 230°C et les fréquences angulaires sont typiquement comprises entre 0,1 radis et 100 rad/s.

Dans le cas où le polymère fluoré est le polyfluorure de vinylidène, le polymère fluoré peut être un mélange de deux ou plus d'homopolymères de fluorure de vinylidène présentant des viscosités différentes. La viscosité du mélange, mesurée à 232°C et 100 s-1, est inférieure ou égale à 1600 Pa.s.

Dans le cas où le polymère fluoré est un copolymère de fluorure de vinylidène et d'au moins un autre comonomère listé ci-dessus, le polymère fluoré peut être un mélange de deux ou plus de copolymères présentant des viscosités différentes. La viscosité du mélange, mesurée à 232°C et 100 s-1, est inférieure ou égale à 1600 Pa.s.

La poudre de polymère fluoré possède une taille de particule définie par un Dv50 inférieur ou égal à 120 µm, préférentiellement entre 25 et 100 micromètres.

Le Dv50 appelé ici est le diamètre médian en volume qui correspond à la valeur de la taille de particule qui divise la population de particules examinée exactement en deux. Le Dv50 est mesuré selon la norme ISO 9276 - parties 1 à 6. Dans la présente description, on utilise un granulomètre Malvern Système INSITEC, et la mesure est faite en voie sèche par diffraction laser sur la poudre.

La distribution de tailles de particules peut être caractérisée en plus du Dv50 par le Dv10 et le Dv90. Le Dv10 représente le diamètre pour lequel 10% en volume de la population de particules possède un diamètre inférieur. Le Dv90 représente le diamètre pour lequel 90% en volume de la population de particules possède un diamètre inférieur. Ainsi, le Dv90 de la poudre de l'invention est inférieur ou égal à 200µm, préférentiellement inférieur ou égal à 150µm et encore plus préférentiellement inférieur ou égal à 125µm. Le Dv10 de la poudre de l'invention est inférieur ou égal à 50µm, préférentiellement inférieur ou égal à 40µm et encore plus préférentiellement inférieur ou égal à 25µm. Les Dv10 et Dv90 sont mesurés selon la norme ISO 9276 - parties 1 à 6. Comme pour le Dv50, dans la présente description, on utilise un granulomètre Malvern Système INSITEC, et la mesure est faite en voie sèche par diffraction laser sur la poudre.

Le polymère fluoré utilisé dans l'invention peut être obtenu par des méthodes de polymérisation connues comme la polymérisation en solution, en émulsion ou en suspension. Selon un mode de réalisation, il est préparé par un procédé de polymérisation en émulsion en l'absence d'agent tensioactif fluoré.

Le polymère fluoré utilisé dans l'invention présente une masse moléculaire en nombre allant de 5 kDa à 200 kDa, de préférence de 5 kDa à 150 kDa, et encore plus préférentiellement de 5 kDa à 120 kDa, comme mesuré par chromatographie d'exclusion stérique en DMSO/NaNO3 0,1 M avec du polyméthacrylate de méthyle comme standard de calibration.

Un tel polymère fluoré de faible masse moléculaire peut être obtenu notamment en utilisant un taux élevé d'un ou plusieurs agents de transfert de chaîne lors du procédé de polymérisation. Selon un mode de réalisation, des agents de transfert de chaîne adaptés à ce but sont choisis parmi:

- les hydrocarbures à chaîne courte, tels que l'éthane et le propane,
- les esters, tels que l'acétate d'éthyle et le maléate de diéthyle,
- les alcools, les carbonates, les cétones,
- les halocarbures et les hydrohalocarbures, tels que les chlorocarbures, hydrochlorocarbures, chlorofluorocarbures et les hydrochlorofluorocarbures,
- les solvants organiques, lorsqu'ils sont ajoutés à une réaction de polymérisation en émulsion ou en suspension.

D'autres facteurs favorisant l'obtention de polymères de bas poids moléculaire sont la conduite de la réaction de polymérisation à des températures élevées, ou encore l'emploi de taux élevés d'initiateur.

Le polymère fluoré utilisé dans l'invention, lorsqu'il s'agit d'un copolymère, peut être homogène ou hétérogène, et de préférence homogène. Un polymère homogène présente une structure de chaînes uniforme, la répartition statistique des comonomères ne variant pas entre les chaînes polymères. Un copolymère homogène peut être préparé par un procédé en une seule étape, dans lequel les comonomères sont injectés progressivement en conservant un rapport massique entre eux constant. Dans un polymère hétérogène, les chaînes polymères présentent une distribution en teneur moyenne en comonomères de type multimodale ou étalée, il comprend donc des chaînes polymères riches en un comonomère et des chaînes polymères pauvres en ledit comonomère. Un exemple de PVDF hétérogène figure dans le document WO 2007/080338.

La composition de l'invention comprend en outre un agent d'écoulement en quantité suffisante pour que la composition s'écoule et forme une couche plane, notamment lors d'un procédé de frittage couche par couche.

L'agent d'écoulement est par exemple choisi parmi : les silices précipitées, les silices fumées, les silices vitreuses, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium. De plus, préférentiellement, l'agent d'écoulement a subi une modification chimique de surface de façon à lui conférer un caractère hydrophobe. Par exemple, l'agent d'écoulement est une silice fumée hydrophobe.

L'agent d'écoulement possède une taille de particule telle que le Dv50 est inférieur à 20 $\mu$m.

Selon un mode de réalisation, l'agent d'écoulement est une silice hydrophobe. La silice peut être rendue hydrophobe en greffant des groupes hydrophobes sur les fonctions silanol présentes à la surface. Il a été montré qu'une silice hydrophile (non traitée en surface) n'améliorait pas les propriétés d'écoulement d'une poudre de PVDF. Sans ajout de silice, la poudre de PVDF ne s'écoule pas suffisamment bien pour pouvoir être frittée.

Pour obtenir une coulabilité améliorée du polymère fluoré lors du procédé de frittage il faut utiliser un taux optimal d'agent d'écoulement, qui dépend de la nature de celui-ci et sa granulométrie.

Il a été remarqué qu'une poudre de polymère fluoré additivée de 0,4% de silice hydrophobe a une coulabilité supérieure à celle d'une poudre non additivée, mais inférieure à celle d'une poudre additivée à 0,2% de silice. La poudre additivée à 0,4% de silice hydrophobe peut toujours être « frittée » mais la fenêtre de frittage de la poudre est plus étroite, c'est-à-dire la gamme de température de lit de poudre qui permet un frittage correct de la poudre devient très étroite et difficile à cerner.

La composition de l'invention comprend une teneur en agent d'écoulement allant de 0,01 à 5% en poids de la composition, de préférence allant de 0,025 à 1%.

De préférence, l'agent d'écoulement est de forme sphérique.

Selon un mode de réalisation, la composition de l'invention consiste en un polymère fluoré et un agent d'écoulement, tels que décrits.

Selon un autre mode de réalisation, la composition de l'invention comprend en outre au moins un additif approprié pour les poudres polymères utilisées en frittage, choisi notamment parmi des additifs qui contribuent à améliorer les propriétés de la poudre pour son utilisation en technologie d'agglomération et/ou des additifs permettant d'améliorer les propriétés mécaniques (contrainte à la rupture et allongement à la rupture) ou esthétiques (couleur) des objets obtenus par fusion. La composition de l'invention peut notamment comprendre des colorants, des pigments pour la coloration, des pigments pour l'absorption infra rouge, du noir de carbone, des additifs anti-feu, des fibres de verre, des fibres de carbone, etc. Ces additifs sont sous forme de poudre de Dv50 inférieur à 20 $\mu$m. Les compositions de l'invention peuvent contenir en outre au moins un additif choisi parmi les stabilisants antioxydant, les stabilisants à la lumière, les agents anti-chocs, les agents antistatiques, les agents ignifugeants, et leurs mélanges. Le taux total d'additifs est inférieur ou égal à 50% en poids de la composition.

La poudre de polymère fluoré peut être obtenue par différents procédés. La poudre peut être obtenue directement par un procédé de synthèse en émulsion ou suspension par séchage par pulvérisation (« spray drying »), par lyophilisation (« freeze drying »). La poudre peut également être obtenue par les techniques de broyage, comme le cryo-broyage. La poudre de polymère fluoré possède une taille de particule caractérisée par un diamètre Dv50 inférieur ou égal à 120 $\mu$m. A l'issue de l'étape de fabrication de la poudre, la taille de particule peut être ajustée et optimisée pour le procédé de frittage sous rayonnement électromagnétique par des méthodes de sélection ou de tamisage.

L'agent d'écoulement est ajouté à la poudre de polymère fluoré et mélangé. Lorsque la composition comprend aussi un additif, celui-ci est ajouté en voie fondue en utilisant les moyens classiques de mélange des polymères thermoplastiques tels que des extrudeuses à simple vis, à double vis co- ou contra-rotative ou les comalaxeurs.

La présente invention a également pour objet l'utilisation d'une composition de poudre thermoplastique telle que définie précédemment, dans un procédé de frittage pour fabriquer un objet tridimensionnel.

La présente invention a notamment pour objet un procédé de fabrication d'un objet tridimensionnel, comprenant le frittage couche par couche d'une poudre de composition selon l'invention. Selon un mode de réalisation, ledit procédé utilise le frittage laser (« laser sintering »), dont les principes sont décrits dans les documents US6136948, WO96/06881 et US20040138363, comprend les étapes suivantes:

a) déposer une fine couche de poudre de la composition de polymère fluoré sur une plaque horizontale maintenue dans une enceinte chauffée à une certaine température ;

b) fondre par l'énergie apportée par un laser les particules de poudre en différents points de la couche de poudre selon une géométrie correspondant à l'objet, par exemple à l'aide d'un ordinateur ayant en mémoire la forme de l'objet et restituant cette dernière sous forme de tranches ;

c) abaisser la plaque horizontale d'une valeur correspondant à l'épaisseur d'une couche de poudre, par exemple entre 0,05 et 2 mm et généralement de l'ordre de 0,1 mm ;

d) déposer une nouvelle couche de poudre. Cette couche est à une température appelée température du lit de poudre (ou température du lit) ;

e) fondre cette nouvelle couche par l'énergie apportée par le laser selon une géométrie correspondant à cette nouvelle tranche de l'objet ;

f) répéter la procédure des étapes c), d) et e) jusqu'à ce que tout l'objet ait été fabriqué

g) refroidir l'ensemble à l'issue de la fabrication complète de l'objet ;

h) séparer l'objet fabriqué de la poudre environnante n'ayant pas été fondue.

La présente invention concerne aussi un objet tridimensionnel susceptible d'être fabriqué selon le procédé décrit précédemment.

L'association d'un polyfluorure de vinylidène ou d'un copolymère de difluorure de vinylidène ayant une viscosité adaptée et de l'additivation de la poudre de PVDF avec une silice hydrophobe permet le frittage de la poudre de PVDF avec des paramètres procédé standard. Par exemple, cela permet d'utiliser des densités d'énergie d'irradiation de l'ordre de 25 à 45 mJ/mm$^2$ en un seul scan pour une machine de frittage Formiga P100 de chez EOS. Les pièces obtenues possèdent une bonne géométrie et des propriétés mécaniques satisfaisantes. La cristallinité et les masses molaires du PVDF sont préservées à l'issue du procédé de frittage dans les pièces fabriquées.

EXEMPLES

Les exemples suivants illustrent l'invention sans la limiter.

**Produits :**

PVDF 1: Homopolymère de difluorure de vinylidène qui possède une viscosité à l'état fondu mesurée à 232°C et 100 s$^{-1}$ de 250 Pa.s.

PVDF 2 : Homopolymère de difluorure de vinylidène qui possède une viscosité à l'état fondu mesurée à 232°C et 100 s$^{-1}$ de 450 Pa.s.

PVDF 3 : Copolymère de difluorure de vinylidène et d'hexafluoropropylène qui possède une viscosité à l'état fondu mesurée à 232°C et 100 s$^{-1}$ de 550 Pa.s et une température de fusion mesurée par analyse thermique de 157°C.

Agent d'écoulement 1 (AE1): L'agent d'écoulement AE1 est une silice fumée de chez Cabot commercialisée sous le nom Cab-o-sil TS610. La surface a été modifiée avec du diméthyldichlorosilane pour lui conférer un caractère hydrophobe. Elle possède un diamètre Dv50 inférieur à 20$\mu$m.

Agent d'écoulement 2 (AE2) : L'agent d'écoulement AE2 est une silice fumée hydrophile de chez Cabot commercialisée sous le nom Cab-o-sil M5. Elle possède un diamètre Dv50 inférieur à $20\mu m$.

Agent d'écoulement 3 (AE3) : L'agent d'écoulement AE3 est une silice fumée hydrophile de chez Evonik commercialisée sous le nom Aerosil 150. Elle possède un diamètre Dv50 inférieur à $20\mu m$.

Agent d'écoulement 4 (AE4) : L'agent d'écoulement AE4 est un oxyde d'aluminium fumé de chez Evonik commercialisé sous le nom Aeroxide AluC. Il possède un diamètre Dv50 inférieur à $20\mu m$.

**Préparation des poudres de PVDF**

Procédé 1 : Des poudres de PVDF1 ont été préparées par cryo-broyage en 2 étapes avec un broyeur Netzch CUM 150. La première étape a consisté en un pré-broyage cryogénique de granulés. Pour cette étape, le broyeur est équipé de disques à broches de diamètre 5 mm. La vitesse de rotation des disques est fixée à 14000 tours/minute. La poudre ainsi obtenue est ensuite cryo-broyée une seconde fois sur le même broyeur Netzch mais équipé d'un rotor soufflant et d'une grille de $100\mu m$ dans la chambre de broyage. Deux poudres présentant des distributions de tailles de particules différentes ont été obtenues en faisant varier la vitesse du rotor et le débit de poudre :

- poudre ayant une distribution de tailles de particules caractérisée par $D_v10=15\mu m$, $D_v50=50\mu m$ et $D_v90=140\mu m$ obtenue avec une vitesse du rotor de 12000 tours/minute et un débit à 5kg/h.

- poudre ayant une distribution de tailles de particules caractérisée par $D_v10=15\mu m$, $D_v50=54\mu m$ et $D_v90=162\mu m$ obtenue avec une vitesse du rotor de 10000 tours/minute et un débit à 10kg/h.

Procédé 2 : Des poudres de PVDF 1, de PVDF2 et de PVDF3 ont été préparées par cryo-broyage à partir de granulés à l'aide d'un broyeur à picots contra-rotatif. Les granulés sont d'abord passés une fois dans le broyeur puis la poudre obtenue est passée deux nouvelles fois dans le broyeur. Ensuite, les poudres sont tamisées à $200\mu m$.

Procédé 3 : Une poudre de PVDF1 a été préparée par cryo-broyage en 2 étapes avec un broyeur Netzch CUM 150. La première étape a consisté en un pré-broyage cryogénique de granulés. Pour cette étape, le broyeur est équipé de disques à broches de diamètre 5 mm. La vitesse de rotation des disques est fixée à 14000 tours/minute. La poudre ainsi obtenue est ensuite cryo-broyée une seconde fois avec le même broyeur Netzch mais équipé de disques à broches de 3 mm. La poudre ainsi obtenue possède une distribution de tailles de particules caractérisée par un Dv10 de $40\mu m$, un Dv50 de $108\mu m$ et un Dv90 de $250\mu m$.

Procédé 4 : Une poudre de PVDF1 a été préparée selon le même protocole que le procédé 2, à savoir qu'elle a été obtenue par cryo-broyage de granulés à l'aide d'un broyeur à picots contra-rotatif. Les granulés sont d'abord passés une fois dans le broyeur puis la poudre obtenue est passée deux nouvelles fois dans le broyeur. A la suite de cette étape de cryo-broyage, une étape de sélection est réalisée sur la poudre pour séparer les fines et les grosses particules. Deux types de poudres sont alors obtenus :

- une poudre correspondant à la fraction des fines particules qui possède une distribution de tailles de particules caractérisée par Dv10 de $11\mu m$, un Dv50 de $30\mu m$ et un Dv90 de $60\mu m$

- une poudre correspondant à la fraction des grosses particules qui possède une distribution de tailles de particules caractérisée par Dv10 de $60\mu m$, un Dv50 de $90\mu m$ et un Dv90 de $185\mu m$

**Caractérisation des propriétés des poudres de PVDF:**

Granulométrie : La distribution de taille de particules a été mesurée par voie sèche à l'aide d'un granulomètre laser de type MALVERN Système INSITEC.

Coulabilité : La coulabilité est évaluée selon la norme ISO 6186. Cela consiste à mesurer le temps d'écoulement d'une quantité donnée de poudre au travers d'un entonnoir dont le diamètre de sortie est fixé à 25mm. Plus le temps est court, mieux la poudre s'écoule.

Densité :

La densité dite «non tassée » de la poudre a été mesurée de la façon suivante. Une éprouvette graduée de 250 ml a été remplie avec la poudre. Le volume exact et la masse sont mesurées d'où on déduit la densité. La densité dite tassée a été obtenue en faisant subir une série de chocs verticaux contrôlés (amplitude, fréquence) à l'éprouvette préalablement remplie pour la mesure de la densité non tassée.

**Caractérisation des éprouvettes après frittage**

Dégradation du PVDF dans les éprouvettes frittées :

La dégradation du PVDF a été évaluée par mesure des masses molaires par GPC et estimation d'un taux de gel/insolubles.

Analyse GPC :

Les masses molaires avant et après passage en machine ont été mesurées par GPC à l'aide d'une chaîne d'analyse de chez Waters munie d'une Pompe P600, d'un injecteur Wisp 717Plus et d'un détecteur réfractomètre Waters 2414 RID. La température des colonnes est régulée à 50°C. L'échantillon à analyser est dissous dans le DMSO + 0,1 M NaNO$_3$ à une concentration de 2g/L pendant 4h à 95°C. La solution est ensuite filtrée à l'aide d'un filtre ACRODISC GHP Polypropylène de diamètre 25 mm de porosité 0,45 μm. Les masses sont exprimées en équivalentPMMA. La fraction d'insoluble est estimée en comparant l'intensité du signal du réfractomètre à celle d'un PVDF complètement soluble.

Analyse Diffraction des rayons X aux grands angles :

La cristallinité des éprouvettes après frittage et de la poudre de PVDF avant frittage a été évaluée par diffraction des rayons X aux grands angles à l'aide d'un banc de diffraction INEL. Les spectres de diffraction ont été enregistrés dans les conditions suivantes :

- Longueur d'onde : raie principale K$\alpha$1 du cuivre (1,54 Angström)
- Puissance du générateur : 40 kV - 25 mA
- Mode d'observation : transmission
- Temps de comptage : 3000 s
- Détecteur courbe 1D

Le taux de cristallinité a été évalué à partir de la décomposition amorphe/cristal à l'aide du logiciel Fityk. A partir de la décomposition cristal/amorphe réalisée sur les spectres, on peut estimer un taux de cristallinité :

$$\chi_c\,(\%) = \text{intensité intégrée des raies cristallines / intensité intégrée totale (cristalline + amorphe)}.$$

Cela correspond à la proportion massique de phase cristalline dans le produit.

L'indice de cristallinité est dépendant de la décomposition du spectre, c'est pourquoi les taux de cristallinité déterminés par diffraction des rayons X ne sont pas forcément des valeurs absolues de la cristallinité, mais permettent de comparer des produits quand un même modèle de décomposition du spectre est utilisé, ce qui est le cas ici.

**Propriétés d'écoulement de la poudre PVDF1 broyée selon le procédé 1 en fonction de la nature de l'agent d'écoulement :**

La poudre de PVDF1 broyée selon le procédé 1 et présentant une distribution de tailles de particules caractérisée par D$_v$10=15μm, D$_v$50=50μm et D$_v$90=140μm a été mélangée respectivement aux agents d'écoulement AE1, AE2, AE3 ou AE4 à hauteur de 0,2% en poids à l'aide d'un mélangeur de type robot ménager MAGIMIX à grande vitesse pendant 110 secondes.

Les propriétés de la poudre de PVDF1 broyée selon le procédé 1 figurent dans le Tableau 1.

Tableau 1

| Nature de la poudre de PVDF1 | Nature et taux de l'agent d'écoulement | Temps d'écoulement (s) | Densité non tassée | Densité tassée |
|---|---|---|---|---|
| Poudre de PVDF1 broyée selon le procédé 1 | Pas d'agent d'écoulement | Ne s'écoule pas | 0,651 | 0,905 |
| | 0.2% AE1 (silice hydrophobe) | 7 s | 0,726 | 0,955 |
| | 0.2% AE2 (silice hydrophile) | Ne s'écoule pas | 0,651 | 0,815 |
| | 0.2% AE3 (silice hydrophile) | Ne s'écoule pas | 0,641 | 0,842 |
| | 0.2% AE4 (oxyde d'aluminium) | Ne s'écoule pas | 0,681 | 0,872 |

La silice hydrophobe permet l'écoulement de la poudre au travers de l'orifice de l'entonnoir. Dans ce test, un temps d'écoulement de 7 secondes est considéré comme un signe de très bonne coulabilité. Sans silice ou additivée de silices hydrophiles AE2 ou AE3 ou d'oxyde d'aluminium AluC, la poudre de PVDF ne s'écoule pas et n'est pas utilisable en tant que telle dans le procédé de frittage à cause de cette mauvaise coulabilité.

**Passage en machine de frittage de la poudre PVDF1 broyée selon le procédé 1 et additivée de silice hydrophobe AE1:**

Des éprouvettes de traction de type ISO 527 1BA et 1A ont été réalisées par frittage à partir de la poudre de PVDF 1 broyée selon le procédé 1 avec une machine Laser Sintering Formiga P100 de chez EOS. Un recoater à bords arrondis (ref : 12130109) a été utilisé. Les conditions de passage en machine ont été les suivantes :

-    Vitesse du contour = 1500mm/s

-    Vitesse de hachurage = 2500 mm/s

-    Hachurage « déplacement du rayon » = 0,15mm.

Les conditions opératoires sont résumées dans le Tableau 2 suivant :

Tableau 2

| Température de la chambre d'exposition (°C) | Température de la chambre de retrait (°C) | Densité d'énergie (mJ/mm$^2$) | Puissance laser (W) |
|---|---|---|---|
| 152°C | 135°C | 35 | 13,13 |
| 152°C | 135°C | 40 | 15 |
| 152°C | 135°C | 43 | 16,125 |

La caractérisation de la composition de PVDF selon l'invention selon la méthode de GPC a permis d'obtenir les résultats figurant dans le Tableau 3.

Tableau 3

| | Température de la chambre d'exposition (°C) | Densité d'énergie (mJ/mm$^2$) | Mn (g/mol) | Mw (g/mol) | Signal réfractométrique K(RI) | Fraction d'insoluble |
|---|---|---|---|---|---|---|
| Poudre de PVDF1 broyée selon le procédé 1 | - | - | 82300 | 219000 | 87,8 | 0% |

(suite)

| | Température de la chambre d'exposition (°C) | Densité d'énergie (mJ/mm$^2$) | Mn (g/mol) | Mw (g/mol) | Signal réfractométrique K(RI) | Fraction d'insoluble |
|---|---|---|---|---|---|---|
| Eprouvette ISO527-1BA frittée à partir de poudre de PVDF1 broyée selon le procédé 1 | 152°C | 43 | 81300 | 220200 | 88,4 | 0% |

Ces résultats montrent qu'aucune dégradation du PVDF1, évaluée par rapport à la taille des chaînes de PVDF1 ou à la présence d'insoluble, n'a été observée par GPC.

La caractérisation de la composition selon l'invention de PVDF1 avant et après frittage laser selon la méthode de diffraction des rayons X indiquée ci-dessus a permis d'obtenir les résultats figurant dans le Tableau 4.

Tableau 4

| | Température de la chambre d'exposition (°C) | Densité d'énergie (mJ/mm$^2$) | Taux de cristallinité mesuré en diffraction des rayons X (%) |
|---|---|---|---|
| Poudre de PVDF 1 broyée selon le procédé 1 | - | - | 30% |
| Eprouvette ISO527-1BA frittée à partir de poudre de PVDF1 broyée selon le procédé 1 | 152°C | 43 | 32% |

Ces résultats montrent que le taux de cristallinité du PVDF1 dans l'éprouvette frittée est comparable à celui de la poudre de PVDF 1 avant frittage. Ainsi, cela montre que l'aptitude du PVDF1 à cristalliser a été conservée après le passage en machine de frittage laser.

**Passage en machine de frittage de poudres à base de PVDF1, PVDF2 et PVDF3:**

Des éprouvettes de traction de type ISO 527 1BA ont été réalisées par frittage à partir de poudres de PVDF selon l'invention avec une machine Laser Sintering Formiga P100 de chez EOS. Un recoater à bords arrondis (ref : 12130109) a été utilisé. Les poudres ont été additivées d'agents d'écoulement AE1, AE3 ou AE4 à hauteur de 0,2% en poids à l'aide d'un mélangeur de type robot ménager MAGIMIX à grande vitesse pendant 110 secondes. Les conditions de passage en machine ont été les suivantes :

- Vitesse du contour = 1500mm/s

- Vitesse de hachurage = 2500 mm/s

- Hachurage « déplacement du rayon » = 0,15mm.

Différents niveaux de densité d'énergie ont été appliqués variant de 30 mJ/mm2 à 43 mJ/mm2. Ces densités d'énergie laser ont été obtenues en faisant varier la puissance du laser.

Pour chaque poudre de PVDF, différentes températures de chambre d'exposition et de chambre de retrait ont été appliquées. La fenêtre de frittage des poudres de PVDF a ainsi été déterminée. Elle est définie dans le cas présent comme la plage de températures de la chambre d'exposition qui permet de construire sans rencontrer de problèmes des éprouvettes de type ISO 527-1BA ne présentant pas de défaut géométrique majeur.

Deux principaux défauts de construction et/ou de géométrie des pièces sont observés et permettent de définir la « fenêtre de frittage » :

- Lorsque la température de la chambre d'exposition est trop basse, les bords des premières couches frittées ont tendance à se soulever au-dessus du lit de poudre à la cristallisation du PVDF si bien qu'elles sont emportées par le « recoater » lors de la dépose de la couche suivante de poudre « fraîche ». La construction doit alors être arrêtée.

La température de la chambre d'exposition juste avant l'apparition de ce problème est définie comme la borne inférieure de la fenêtre de frittage.

- Lorsque la température de la chambre d'exposition est trop élevée, la coulabilité de la poudre devient très mauvaise et la poudre a une forte tendance à s'agglomérer. Cela se traduit par un mauvais remplissage des empreintes lors du dépôt d'une couche de poudre fraîche, l'apparition de fissures dans le lit de poudre et à la surface des pièces et/ou à une forte agglomération de la poudre à la surface des pièces. La température de la chambre d'exposition juste avant l'apparition de ce problème est définie comme la borne supérieure de la fenêtre de frittage.

Pour le procédé de frittage laser, il est recherché d'avoir une poudre qui présente une fenêtre de frittage la plus large possible. Le tableau 5 montre l'impact de la distribution de tailles de particules sur la largeur fenêtre de frittage pour la fabrication d'éprouvettes de type ISO 527 1BA. Selon les exemples 1 à 4 de l'invention, cette fenêtre varie de 2°C à 9°C. Néanmoins, quand la fraction de « grosses particules » caractérisée par le Dv90 est trop importante et/ou que la fraction de fines particules est trop faible caractérisée par le Dv10, la fenêtre de frittage devient nulle. Il n'est plus possible de construire des pièces sans faire face aux problèmes rédhibitoires tels que l'emportement des pièces en cours de fabrication par le recoater lors de la dépose d'une couche fraîche de poudre ou une très forte agglomération de la poudre à la surface des pièces. C'est ce qui arrive dans le cadre de l'invention quand le Dv10 devient supérieur ou égal à 50$\mu$m et/ou le Dv90 supérieur ou égal à 200$\mu$m. Selon l'exemple comparatif 1, la poudre de PVDF1 broyée selon le procédé 3 et ayant une distribution de tailles de particules caractérisée par Dv10=40$\mu$m, Dv50=108$\mu$m et Dv90=250$\mu$m ne permet pas de construire des éprouvettes de type ISO 527 1BA. Quelle que soit la température de la chambre d'exposition, les couches de PVDF frittées sont emportées par le recoater lors de la dépose de la couche suivante de poudre « fraîche » ce qui ne permet pas d'aller jusqu'au bout du « run » de construction des pièces. Le même type de problème est rencontré dans le cas de l'exemple comparatif 2.

Tableau 5

| | Agent d'écoulement | $D_v10$ | $D_v50$ | $D_v90$ | Borne inférieure de la fenêtre de frittage (°C) | Borne supérieure de la fenêtre de frittage (°C) | Largeur de la fenêtre de frittage (°C) |
|---|---|---|---|---|---|---|---|
| **Exemple 1 :** Poudre de PVDF1 obtenue selon le procédé 2 | 0.2% AE1 | 15 | 50 | 111 | 148 | 152 | 4 |
| **Exemple2 :** Poudre de PVDF2 obtenue selon le procédé 2 | 0.2% AE1 | 17 | 57 | 128 | 142 | 150 | 8 |
| **Exemple 3 :** Poudre de PVDF3 obtenue selon le procédé 2 | 0.2% AE1 | 17 | 53 | 118 | 128 | 137 | 9 |
| **Exemple 4 :** Poudre de PVDF1 obtenue selon le procédé 1 | 0.2% AE1 | 15 | 54 | 162 | 152 | 154 | 2 |
| **Exemple comparatif 1:** Poudre de PVDF1 obtenue selon le procédé 3 | 0.2% AE1 | 40 | 108 | 250 | Frittage d'éprouvettes ISO 527-1BA impossible | | |

(suite)

| | | Agent d'écoulement | $D_v10$ | $D_v50$ | $D_v90$ | Borne inférieure de la fenêtre de frittage (°C) | Borne supérieure de la fenêtre de frittage (°C) | Largeur de la fenêtre de frittage (°C) |
|---|---|---|---|---|---|---|---|---|
| | **Exemple comparatif 2:** Poudre de PVDF1 obtenue selon le procédé 4 | 0.2% AE1 | 60 | 90 | 185 | Frittage d'éprouvettes ISO 527-1BA impossible | | |
| | **Exemple comparatif 3:** Poudre de PVDF1 obtenue selon le procédé 1 | 0.2% AE3 | 15 | 54 | 162 | Frittage d'éprouvettes ISO 527-1BA impossible | | |
| | **Exemple comparatif 4:** Poudre de PVDF1 obtenue selon le procédé 1 | 0.2% AE4 | 15 | 54 | 162 | Frittage d'éprouvettes ISO 527-1BA impossible | | |

De plus, selon les exemples comparatifs 3 et 4, la coulabilité des poudres de PVDF1 broyées selon le procédé 1 et additivées de 0.2% en poids de silice hydrophile ou d'oxyde d'aluminium comme agent d'écoulement est insuffisante pour permettre la fabrication d'éprouvettes ISO527 1BA quelle que soit la température de la chambre d'exposition.

**Revendications**

1. Composition comprenant une poudre de polymère thermoplastique fluoré et un agent d'écoulement hydrophobe, dans laquelle la poudre de polymère fluoré possède une taille de particule définie par un Dv50 inférieur ou égal à 120 µm, de préférence entre 25 et 100 micromètres, et ledit polymère fluoré présente une masse moléculaire en nombre allant de 5 kDa à 200 kDa comme mesuré par chromatographie d'exclusion stérique en DMSO/NaNO3 0,1 M avec du polyméthacrylate de méthyle comme standard de calibration.

2. Composition selon la revendication 1, dans laquelle le polymère fluoré est un homopolymère ou un copolymère comprenant au moins un monomère listé ci-après : le fluorure de vinyle; le fluorure de vinylidène; le trifluoroéthylène; lechlorotrifluoroéthylène; le 1,2-difluoroéthylène; le tétrafluoroéthylène; l'hexafluoropropylène; les perfluoro(alkyl vinyl) éthers tels que le perfluoro(méthyl vinyl)éther, le perfluoro(éthyl vinyl) éther et le perfluoro(propyl vinyl) éther; le perfluoro (1,3-dioxole); le perfluoro(2,2-diméthyl- 1,3 -dioxole) ; le produit de formule $CF2=CFOCF2CF(CF3)OCF2CF2X$ dans laquelle X est SO2F, CO2H, CH2OH, CH2OCN ou $CH_20PO_3H$; le produit de formule $CF_2=CFOCF_2CF_2SO2F$; le produit de formule $F(CF_2)nCH_20CF=CF_2$ dans laquelle n est 1, 2, 3, 4 or 5; le produit de formule $R_1CH_2OCF=CF_2$ dans laquelle $R_1$ est l'hydrogène ou $F(CF_2)_m$ et m vaut 1, 2, 3 ou 4; le produit de formule R2OCF=CH2 dans laquelle R2 est F(CF2)p et p est 1, 2, 3 ou 4; le perfluorobutyl éthylène (PFBE); le 3,3,3-trifluoropropène et le 2-trifluorométhyl-3,3,3-trifluoro-1-propène.

3. Composition selon l'une des revendications 1 et 2, dans laquelle ledit polymère fluoré est un polymère comprenant des motifs issus du fluorure de vinylidène, et est choisi parmi le polyfluorure de vinylidène homopolymère et les copolymères comprenant au moins 50 % en moles, et de préférence au moins 75 % en moles de motifs issus du fluorure de vinylidène et le reste des motifs issus d'au moins un autre comonomère choisi parmi : le fluorure de vinyle; le trifluoroéthylène; le chlorotrifluoroéthylène; le 1,2- difluoroéthylène; le tétrafluoroéthylène; l'hexafluoropropylène; les perfluoro(alkyl vinyl) éthers tels que le perfluoro(méthyl vinyl)éther, le perfluoro(éthyl vinyl) éther et le perfluoro(propyl vinyl) éther; le perfluoro(1,3-dioxole); le perfluoro(2,2-diméthyl-1,3- dioxole), et leurs mélanges.

4. Composition selon l'une des revendications 1 et 2, dans laquelle ledit polymère fluoré est choisi parmi les copolymères d'éthylène et de chlorotrifluoroéthylène, d'éthylène et de térafluoroéthylène, d'hexafluoropropylène et de tétrafluoroéthylène, de tétrafluoroéthylène et d'un monomère de la famille des perfluoro(alkyl vinyl)éther.

5. Composition selon l'une des revendications 1 à 4, dans laquelle ledit polymère fluoré a une viscosité inférieure ou égale à 1600 Pa.s, de préférence inférieure ou égale à 1000 Pa.s, mesurée à une température de 232°C et à un taux de cisaillement de 100 s$^{-1}$ selon la norme ASTM D3825.

6. Composition selon l'une des revendications 1 à 5 dans laquelle la poudre de polymère fluoré possède une taille de particule définie par un Dv90 inférieur ou égal à 200$\mu$m, préférentiellement inférieur ou égal à 150$\mu$m et encore plus préférentiellement inférieur ou égal à 125$\mu$m.

7. Composition selon l'une des revendications 1 à 6 dans laquelle la poudre de polymère fluoré possède une taille de particule définie par Dv10 inférieur ou égal à 50$\mu$m, préférentiellement inférieur ou égal à 40$\mu$m et encore plus préférentiellement inférieur ou égal à 25$\mu$m.

8. Composition selon l'une des revendications 1 à 7 dans laquelle ledit polymère fluoré présente une masse moléculaire en nombre allant de 5 kDa à 150 kDa, et de préférence de 5 kDa à 120 kDa.

9. Composition selon l'une des revendications 1 à 8, dans laquelle ledit agent d'écoulement hydrophobe est choisi parmi : les silices précipitées, les silices fumées, les silices vitreuses, les silices pyrogénées, les phosphates vitreux, les borates vitreux, les oxydes vitreux, l'alumine amorphe, le dioxyde de titane, le talc, le mica, le kaolin, l'attapulgite, les silicates de calcium, l'alumine et les silicates de magnésium.

10. Composition selon l'une des revendications 1 à 7 dans laquelle la proportion massique d'agent écoulement est comprise entre 0,01 et 5%, de préférence entre 0,025 et 1% du poids total de la composition.

11. Composition selon l'une des revendications 1 à 10, consistant en un polymère fluoré et un agent d'écoulement hydrophobe.

12. Composition selon l'une des revendications 1 à 10 comprenant en outre jusqu'à 50% en poids d'un ou plusieurs additifs choisis parmi des colorants, des pigments pour la coloration, des pigments pour l'absorption infra rouge, du noir de carbone, des additifs anti-feu, des fibres de verre, des fibres de carbone, les stabilisants antioxydant, les stabilisants à la lumière, les agents anti-chocs, les agents antistatiques et les agents ignifugeants.

13. Procédé de fabrication d'un objet en trois dimensions, ledit procédé comprenant le frittage laser de la composition sous forme de poudre selon l'une quelconque des revendications 1 à 12, pour obtenir un objet en trois dimensions.

14. Utilisation de la composition selon l'une des revendications 1 à 12 comme matériau pour le frittage laser en trois dimensions.

15. Objet en trois dimensions obtenu par le procédé selon la revendication 13.

**Patentansprüche**

1. Zusammensetzung, die ein Pulver aus einem thermoplastischen Fluorpolymer und ein hydrophobes Fließhilfsmittel umfasst, wobei das Fluorpolymerpulver eine Teilchengröße aufweist, die durch einen Dv50 von kleiner gleich 120 $\mu$m, vorzugsweise zwischen 25 und 100 Mikrometern definiert ist, und das Fluorpolymer ein Zahlenmittel der Molekülmasse von 5 kDa bis 200 kDa aufweist, ermittelt per sterischer Ausschlusschromatographie in DMSO/NaNO3 0,1 M mit Polymethylmethacrylat als Kalibrierungsstandard.

2. Zusammensetzung nach Anspruch 1, wobei das Fluorpolymer ein Homopolymer oder ein Copolymer ist, das mindestens ein nachfolgend aufgeführtes Monomer umfasst: Vinylfluorid, Vinylidenfluorid, Trifluorethylen; Chlortrifluorethylen; 1,2-Difluorethylen; Tetrafluorethylen; Hexafluorpropylen; Perfluor(alkylvinyl)ether wie Perfluor(methylvinyl)ether, Perfluor(ethylvinyl)ether und Perfluor(propylvinyl)ether; Perfluor(1,3-dioxol); Perfluor(2,2-dimethyl-1,3-dioxol); Produkt mit der Formel $CF_2=CFOCF_2CF(CF_3)OCF_2CF_2X$, in der X $SO_2F$, $CO_2H$, $CH_2OH$, $CH_2OCN$ oder $CH_2OPO_3H$ ist; Produkt mit der Formel $CF_2=CFOCF_2CF_2SO_2F$; Produkt mit der Formel $F(CF_2)nCH_2OCF=CF_2$, in

der n 1, 2, 3, 4 oder 5 ist; Produkt mit der Formel $R_1CH_2OCF=CF_2$, in der $R_1$ Wasserstoff oder $F(CF_2)m$ ist und m 1, 2, 3 oder 4 entspricht; Produkt mit der Formel $R_2OCF=CH_2$, in der $R_2$ $F(CF_2)p$ ist und p 1, 2, 3 oder 4 ist; Perfluorbutylethylen (PFBE); 3,3,3-Trifluorpropen und 2-Trifluormethyl-1-3,3,3-trifluor-1-propen.

3. Zusammensetzung nach einem der Ansprüche 1 und 2, wobei das Fluorpolymer ein Polymer ist, das von Vinylidenfluorid stammende Einheiten umfasst, und aus Polyvinylidenfluorid-Homopolymer und Copolymeren ausgewählt ist, die mindestens 50 Mol-% und vorzugsweise mindestens 75 Mol-% von Vinylidenfluorid stammende Einheiten und als Rest Einheiten umfasst, die von mindestens einem weiteren Comonomer stammen, das ausgewählt ist aus: Vinylfluorid; Trifluorethylen; Chlortrifluorethylen; 1,2-Difluorethylen; Tetrafluorethylen; Hexafluorpropylen; Perfluor(alkylvinyl)ether wie Perfluor(methylvinyl)ether, Perfluor(ethylvinyl)ether und Perfluor(propylvinyl)ether; Perfluor(1,3-dioxol); Perfluor(2,2-dimethyl-1,3-dioxol) und ihren Mischungen.

4. Zusammensetzung nach einem der Ansprüche 1 und 2, wobei das Fluorpolymer aus Copolymeren aus Ethylen und Chlortrifluorethylen, Ethylen und Tetrafluorethylen, Hexafluorpropylen und Tetrafluorethylen, Tetrafluorethylen und einem Monomer der Familie der Perfluor(alkylvinyl)ether ausgewählt ist.

5. Zusammensetzung nach einem der Ansprüche 1 bis 4, wobei das Fluorpolymer eine Viskosität von kleiner gleich 1600 Pa.s, vorzugsweise kleiner gleich 1000 Pa.s aufweist, gemessen bei einer Temperatur von 232°C und bei einer Schergeschwindigkeit von 100 $s^{-1}$ gemäß Norm ASTM D3825.

6. Zusammensetzung nach einem der Ansprüche 1 bis 5, wobei das Fluorpolymerpulver eine Teilchengröße aufweist, die durch einen Dv50 von kleiner gleich 200 $\mu$m, vorzugsweise kleiner gleich 150 $\mu$m und noch bevorzugter kleiner gleich 125 $\mu$m definiert ist.

7. Zusammensetzung nach einem der Ansprüche 1 bis 6, wobei das Fluorpolymerpulver eine Teilchengröße aufweist, die durch einen Dv50 von kleiner gleich 50 $\mu$m, vorzugsweise kleiner gleich 40 $\mu$m und noch bevorzugter kleiner gleich 25 $\mu$m definiert ist.

8. Zusammensetzung nach einem der Ansprüche 1 bis 7, wobei das Fluorpolymer ein Zahlenmittel der Molekülmasse von 5 kDa bis 150 kDa und vorzugsweise von 5 kDa bis 120 kDa aufweist.

9. Zusammensetzung nach einem der Ansprüche 1 bis 8, wobei das hydrophobe Fließhilfsmittel ausgewählt ist aus: gefällten Kieselsäuren, pyrogenen Kieselsäuren, Quarzgläsern, Phosphatgläsern, Boratgläsern, Oxidgläsern, amorphem Aluminiumoxid, Titandioxid, Talkum, Glimmer, Kaolin, Attapulgit, Kalziumsilikaten, Aluminiumoxid und Magnesiumsilikaten.

10. Zusammensetzung nach einem der Ansprüche 1 bis 7, wobei der Massenanteil des Fließhilfsmittels zwischen 0,01 und 5%, vorzugsweise zwischen 0,025 und 1% des Gesamtgewichts der Zusammensetzung beträgt.

11. Zusammensetzung nach einem der Ansprüche 1 bis 10, die aus einem Fluorpolymer und einem hydrophoben Fließhilfsmittel besteht.

12. Zusammensetzung nach einem der Ansprüche 1 bis 10, die ferner bis zu 50 Gewichts-% von einem oder mehreren Zusatzstoffen umfasst, die aus Farbstoffen, Pigmenten zum Färben, Pigmenten zur Absorption von Infrarotstrahlung, technischem Ruß, brandhemmenden Zusatzstoffen, Glasfasern, Kohlenstofffasern, Antioxidationsmitteln als Stabilisatoren, Lichtstabilisatoren, stoßdämpfenden Mitteln, antistatischen Mitteln und Flammschutzmitteln ausgewählt sind.

13. Verfahren zur Herstellung eines dreidimensionalen Gegenstands, wobei das Verfahren das Lasersintern der pulverförmigen Zusammensetzung nach einem der Ansprüche 1 bis 12 zum Erhalten eines dreidimensionalen Gegenstands umfasst.

14. Verwendung der Zusammensetzung nach einem der Ansprüche 1 bis 12 als Material zum 3D-Lasersintern.

15. Dreidimensionaler Gegenstand, der mit dem Verfahren nach Anspruch 13 erhalten wird.

**Claims**

1. A composition comprising a thermoplastic fluoropolymer powder and a hydrophobic flow agent, in which the fluoropolymer powder has a particle size defined by a Dv50 of less than or equal to 120 $\mu$m, preferably between 25 and 100 micrometers, in which said fluoropolymer has a number-average molecular mass ranging from 5 kDa to 200 kDa as measured by size exclusion chromatography in DMSO/0.1 M NaNO3 with polymethyl methacrylate as calibration standard.

2. The composition as claimed in claim 1, in which the fluoropolymer is a homopolymer or a copolymer comprising at least one monomer listed below: vinyl fluoride; vinylidene fluoride; trifluoroethylene; chlorotrifluoroethylene; 1,2-difluoroethylene; tetrafluoroethylene; hexafluoropropylene; perfluoro(alkyl vinyl) ethers such as perfluoro(methyl vinyl) ether, perfluoro(ethyl vinyl) ether and perfluoro(propyl vinyl) ether; perfluoro(1,3-dioxole); perfluoro(2,2-dimethyl-1,3-dioxole); the product of formula CF2=CFOCF2CF(CF3)OCF2CF2X in which X is SO2F, CO2H, CH2OH, CH2OCN or CH2OPO3H; the product of formula CF2=CFOCF2CF2SO2F; the product of formula F(CF2)nCH2OCF=CF2 in which n is 1, 2, 3, 4 or 5; the product of formula R1CH2OCF=CF2 in which R1 is hydrogen or F(CF2)m and m is equal to 1, 2, 3 or 4; the product of formula R2OCF=CH2 in which R2 is F(CF2)p and p is 1, 2, 3 or 4; perfluorobutyl ethylene (PFBE); 3,3,3-trifluoropropene and 2-trifluoromethyl-3,3,3-trifluoro-1-propene.

3. The composition as claimed in either of claims 1 and 2, in which said fluoropolymer is a polymer comprising units derived from vinylidene fluoride, and is chosen from polyvinylidene fluoride homopolymer and copolymers comprising at least 50 mol%, and preferably at least 75 mol% of units derived from vinylidene fluoride and the remainder of the units derived from at least one other comonomer chosen from: vinyl fluoride; trifluoroethylene; chlorotrifluoroethylene; 1,2-difluoroethylene; tetrafluoroethylene; hexafluoropropylene; perfluoro(alkyl vinyl) ethers such as perfluoro(methyl vinyl) ether, perfluoro(ethyl vinyl) ether and perfluoro(propyl vinyl) ether; perfluoro(1,3-dioxole); perfluoro(2,2-dimethyl-1,3-dioxole), and mixtures thereof.

4. The composition as claimed in either of claims 1 and 2, in which said fluoropolymer is chosen from copolymers of ethylene and chlorotrifluoroethylene, of ethylene and tetrafluoroethylene, of hexafluoropropylene and tetrafluoroethylene, of tetrafluoroethylene and a monomer from the family of perfluoro(alkyl vinyl) ethers.

5. The composition as claimed in one of claims 1 to 4, in which said fluoropolymer has a viscosity of less than or equal to 1600 Pa.s, preferably of less than or equal to 1000 Pa.s, measured at a temperature of 232°C and at a shear rate of 100 s$^{-1}$ according to the standard ASTM D3825.

6. The composition as claimed in one of claims 1 to 5, in which the fluoropolymer powder has a particle size defined by a Dv90 of less than or equal to 200 $\mu$m, preferentially less than or equal to 150 $\mu$m and even more preferentially less than or equal to 125 $\mu$m.

7. The composition as claimed in one of claims 1 to 6, in which the fluoropolymer powder has a particle size defined by a Dv10 of less than or equal to 50 $\mu$m, preferably less than or equal to 40 $\mu$m and even more preferentially less than or equal to 25 $\mu$m.

8. The composition as claimed in one of claims 1 to 7, in which said fluoropolymer has a number-average molecular mass ranging from 5 kDa to 150 kDa, and preferentially from 5 kDa to 120 kDa.

9. The composition as claimed in one of claims 1 to 8, in which said hydrophobic flow agent is chosen from: precipitated silicas, fumed silicas, vitreous silicas, pyrogenic silicas, vitreous phosphates, vitreous borates, vitreous oxides, amorphous alumina, titanium dioxide, talc, mica, kaolin, attapulgite, calcium silicates, alumina and magnesium silicates.

10. The composition as claimed in one of claims 1 to 7, in which the mass proportion of flow agent is between 0.01% and 5%, preferably between 0.025% and 1% of the total weight of the composition.

11. The composition as claimed in one of claims 1 to 10, consisting of a fluoropolymer and a hydrophobic flow agent.

12. The composition as claimed in one of claims 1 to 10, also comprising up to 50% by weight of one or more additives chosen from dyes, pigments for coloring, pigments for infrared absorption, carbon black, fire-retardant additives, glass fibers, carbon fibers, antioxidant stabilizers, light stabilizers, impact modifiers, antistatic agents and flame retardants.

13. A process for manufacturing a three-dimensional object, said process comprising the laser sintering of the composition in powder form as claimed in any one of claims 1 to 12, to obtain a three-dimensional object.

14. The use of the composition as claimed in one of claims 1 to 12, as material for three-dimensional laser sintering.

15. A three-dimensional object obtained by the process as claimed in claim 13.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2007133912 A
- WO 2017040897 A
- WO 2007080338 A
- US 6136948 A
- WO 9606881 A
- US 20040138363 A

**Littérature non-brevet citée dans la description**

- **DE WEI HUANG et al.** Microstructure, mechanical, and biological properties of porous poly(vinylidene fluoride) scaffolds fabricated by sélective laser sintering. *International Journal of Polymer Science,* vol. 2015
- **DE TARASOVA E. et al.** Layering laser-assisted sintering of functional graded porous PZT ceramoplasts. *Phase Transitions,* 2013, vol. 86 (11), 1121-1129